# EUROPEAN PATENT APPLICATION

(11) **EP 4 610 513 A1**
(43) Date of publication of application: **03.09.2025**
(21) Application number: 24213050.8
(22) Date of filing: 14.11.2024
(51) Int. Cl.: F16F 9/04

(54) **DIAPHRAGM FOR AIR SPRING AND AIR SPRING**

(30) Priority: 01.03.2024 JP 2024031480
(71) Applicant: Nitta Chemical Industrial Products Co., Ltd., Osaka-shi, Osaka 556-0022 (JP)
(72) Inventor: SAKAGUCHI, Naoki, Osaka, 556-0022 (JP); SUGIMOTO, Kenichi, Osaka, 556-0022 (JP)
(74) Representative: Hannke, Christian

(57) **Abstract**

A diaphragm (3) has a pair of annular bead portions (31, 32). Of those, the bead portion (31) includes a bead inner surface (31a) facing an axially inner side. A ventilation passage forming portion (80) is provided on the bead inner surface (31a). The ventilation passage forming portion (80) is configured to form a ventilation passage communicating from a radially inner region (Ai) to a radially outer region (Ao) with respect to the bead inner surface (31a) between a virtual plane (VP) and the bead inner surface (31a), the virtual plane (VP) being orthogonal to an axial direction and in contact with the bead inner surface (31a).

## Description

### BACKGROUND OF THE INVENTION

### Field of the Invention

The present disclosure relates to a diaphragm used for an air spring and an air spring including the diaphragm.

### Description of the Related Art

Conventionally, an air spring has been attached to a railway vehicle, automobiles, various industrial machines, or the like. In general, an air spring has a structure in which a cylindrical diaphragm is interposed between a lower member and an upper member. The diaphragm has a pair of annular bead portions, one of which is mounted on the lower member and the other on the upper member. Accordingly, airtightness of the diaphragm is secured, and an internal space thereof exerts an elastic action as an air chamber. The above-described structure of the air spring is described, for example, in Patent Documents 1, 2.

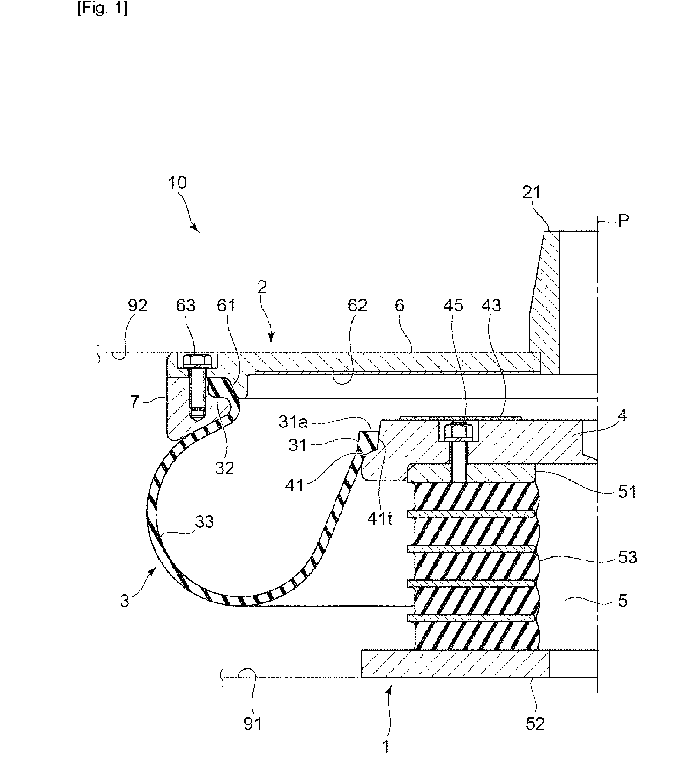

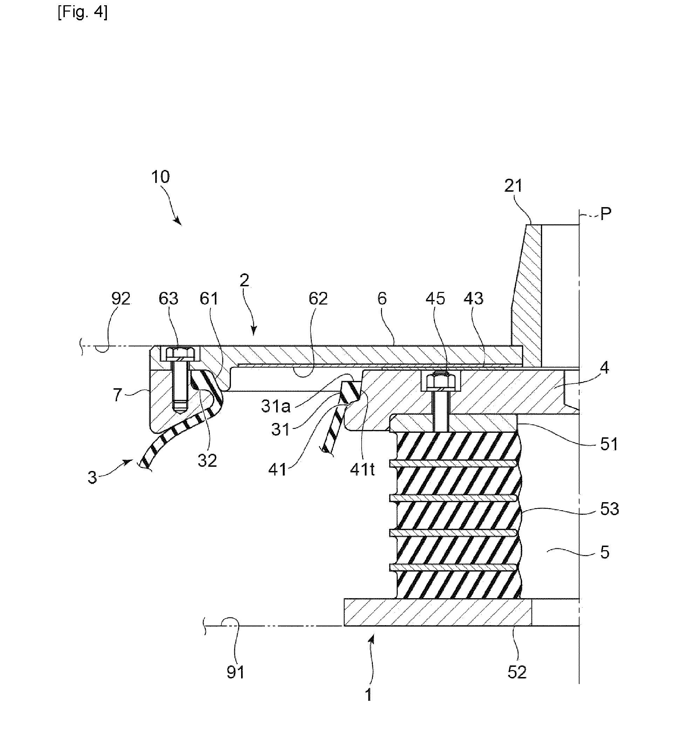

In attachment work of the air spring, a procedure of installing the air spring in an attachment object such as a railway vehicle (an installation process) and then supplying air to the diaphragm (an air supply process) is adopted. In the installation process, since the air spring is in a deflated state (a punctured state), the upper member lowered by a weight of the attachment object abuts on the lower member (see Fig. 4). On the other hand, in the air supply process, since the diaphragm is expanded by the filling of air and the air spring comes into an inflated state, the upper member raised by an action of an internal pressure is separated from the lower member (see Fig. 1).

### Prior Art Document

### Patent Documents

Patent Document 1: JP-A-2023-13426
Patent Document 2: JP-A-2019-108919

### SUMMARY OF THE INVENTION

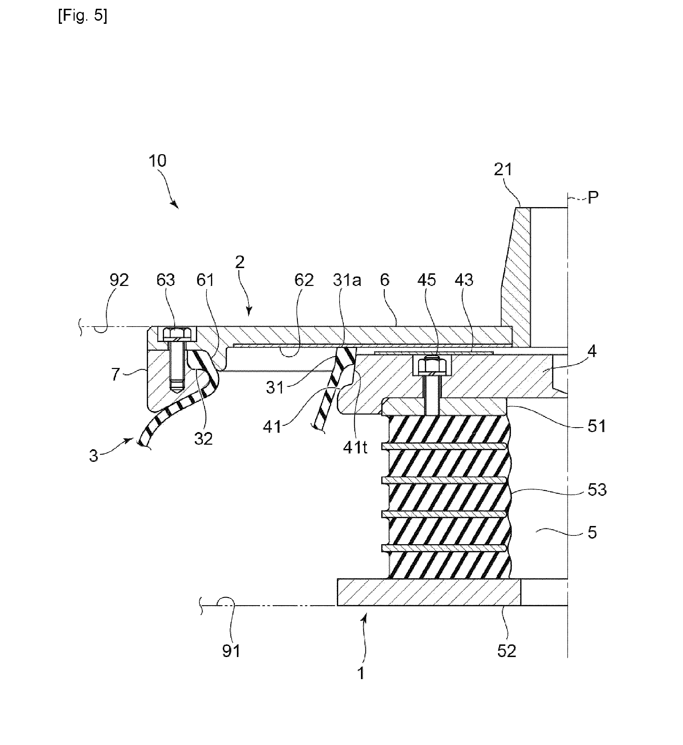

The inventor of the present invention has investigated the attachment work of the air spring, and found that transition from the deflated state to the inflated state may be hindered due to the bead portion of the diaphragm. More specifically, it has been found that when one of the bead portions is displaced due to a slight dimensional variation of the diaphragm or the like, the bead portion seals between the lower member and the upper member that are close to each other in the deflated state (see Fig. 5), and hinders the supply of air to the diaphragm.

Note that it is considered that the above-described phenomenon that the displaced bead portion seals between the lower member and the upper member is not limited to the attachment work of the air spring. Although probability of occurrence is not high, for example, in maintenance working, the above phenomenon may occur even in a case where air is released from the air spring in the inflated state so that the air spring temporarily enters the deflated state, and then air is supplied so that the air spring again enters the inflated state.

The present disclosure has been made in view of the above circumstances, and an object thereof is to provide a diaphragm for an air spring and an air spring capable of supplying air to the diaphragm even when a bead portion seals between a lower member and an upper member.

A diaphragm for an air spring of the present disclosure includes a pair of annular bead portions, in which at least one of the pair of bead portions includes a bead inner surface facing an axially inner side, a ventilation passage forming portion is provided on the bead inner surface, and the ventilation passage forming portion is configured to form a ventilation passage communicating from a radially inner region to a radially outer region with respect to the bead inner surface between a virtual plane and the bead inner surface, the virtual plane being orthogonal to an axial direction and in contact with the bead inner surface.

An air spring of the present disclosure, in which the above-described diaphragm for an air spring is interposed between a lower member and an upper member.

### BRIEF DESCRIPTION OF THE DRAWINGS

Fig. 1 is a longitudinal cross-sectional view illustrating an air spring according to one embodiment of the present disclosure;
Fig. 2 is a longitudinal cross-sectional view of a diaphragm for an air spring;
Fig. 3 is plan views each illustrating a lower surface plate and a bead inner surface;
Fig. 4 is a longitudinal cross-sectional view illustrating the air spring in a deflated state in an installation process;
Fig. 5 is a longitudinal cross-sectional view illustrating the air spring in the deflated state in the installation process; and
Fig. 6 is side views each illustrating a groove as a ventilation passage forming portion.

### DETAILED DESCRIPTION OF THE PREFERRED EMBODIMENTS

One embodiment of the present disclosure will be described with reference to the drawings.

Fig. 1 is a longitudinal cross-sectional view of an air spring of the present embodiment, illustrating a half cut along a central axis P (the same applies to Figs. 4, 5). As illustrated in Fig. 1, an air spring 10 has a structure in which a diaphragm for an air spring 3 (hereinafter, simply referred to as a "diaphragm 3") is interposed between a lower member 1 and an upper member 2. The lower member 1 is disposed below the upper member 2. The diaphragm 3 includes a pair of annular bead portions 31, 32. When the bead portion 31 is mounted on the lower member 1 and the bead portion 32 is mounted on the upper member 2, airtightness of the diaphragm 3 is secured.

In the present embodiment, an example in which the air spring 10 is an air spring for a railway vehicle mounted on a railway vehicle will be described. The lower member 1 is connected to an upper surface of a carriage 91, which is an attachment counterpart on a suspension side. The upper member 2 is connected to a bottom surface of a vehicle body 92, which is an attachment counterpart on a suspended side. The carriage 91 and the vehicle body 92 are illustrated in a simplified manner. An upper surface plate 6 described later is formed of a member separate from the bottom surface of the vehicle body 92, but may be formed of a part of the bottom surface of the vehicle body 92. Note that the air spring of the present disclosure is not limited to an air spring for a railway vehicle, and may be an air spring used for an automobile, various industrial machines, or the like.

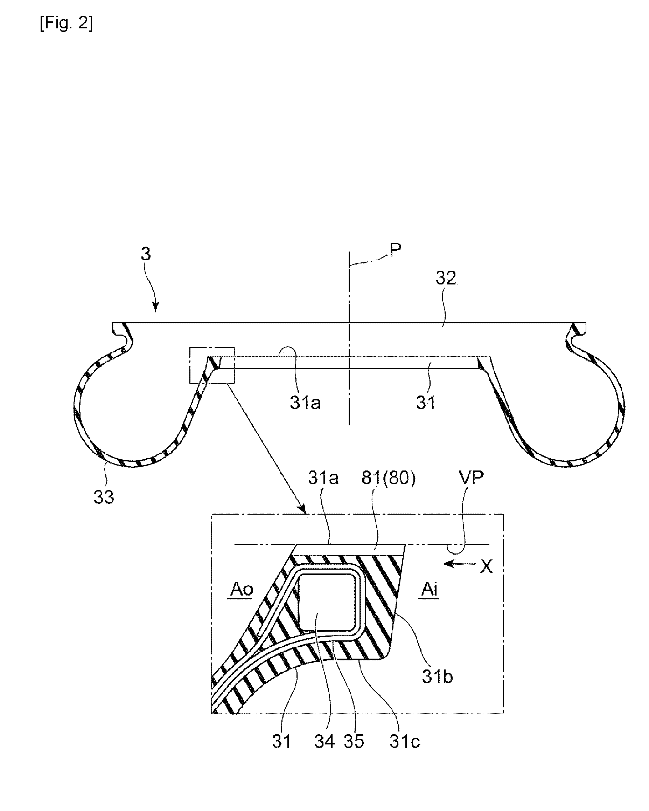

Fig. 2 is a longitudinal cross-sectional view of the diaphragm 3. The diaphragm 3 is an annular film body having the bead portion 31, the bead portion 32, and a main body portion 33 therebetween, and is formed in a cylindrical shape as a whole. The diaphragm 3 is formed of an elastic material such as rubber and has flexibility. Although Fig. 2 illustrates a cross-sectional shape of the diaphragm 3 assembled as the air spring 10, the cross-sectional shape of the diaphragm 3 before being assembled as the air spring 10 may be different from the above cross-sectional shape of the diaphragm 3.

Here, an axial direction is a direction along the central axis P, and corresponds to a height direction of the air spring 10 (an up-down direction in Figs. 1, 2). A side closer to an internal space of the diaphragm 3 is an axially inner side, and an opposite side is an axially outer side. Therefore, the axially inner side of the bead portion 31 and the lower member 1 is an upper side, and the axially inner side of the bead portion 32 and the upper member 2 is a lower side. A radial direction is a direction orthogonal to the central axis P and corresponds to a right-left direction in Figs. 1, 2. A side closer to the central axis P is a radially inner side, and a side away from the central axis P is a radially outer side. A circumferential direction is a direction around the central axis P.

As illustrated in an enlarged manner in Fig. 2, the bead portion 31 includes a bead inner surface 31a facing the axially inner side, a bead bottom surface 31b facing the radially inner side, and a bead outer surface 31c facing the axially outer side. The bead inner surface 31a extends radially outward from an axially inner end of the bead bottom surface 31b, and the bead outer surface 31c extends radially outward from an axially outer end of the bead bottom surface 31b. In the diaphragm 3 in the state assembled as the air spring 10, the bead bottom surface 31b and the bead outer surface 31c are in close contact with (a bead seat portion 41 of) the lower member 1 while the bead inner surface 31a faces the internal space of the diaphragm 3 (see Fig. 1).

An annular bead core 34 extending along the circumferential direction is embedded in each of the pair of bead portions 31, 32. The bead core 34 is formed of, for example, a converged body of a bead wire, and is formed in a substantially rectangular cross section. Further, a reinforcing layer 35 is embedded in the diaphragm 3, and the reinforcing layer 35 is folded back so as to sandwich the bead core 34 in each of the bead portions 31, 32. In the present embodiment, the reinforcing layer 35 is formed by laminating a plurality of (specifically, two) plies formed by coating reinforcing cords arranged in a predetermined direction with rubber. As each of the reinforcing cord, an organic fiber such as nylon is preferably used.

In the present embodiment, the pair of bead portions 31, 32 have inner diameters different from each other. The inner diameter of the bead portion 31 is smaller than the inner diameter of the bead portion 32, and the bead inner surface 31a of the bead portion 31 having the relatively small inner diameter faces a lower surface of the upper surface plate 6 described later. In the present embodiment, a so-called MAN-type diaphragm 3 is used, but the present disclosure is not limited thereto. Therefore, for example, a structure in which the inner diameter of the bead portion 31 is substantially the same as the inner diameter of the bead portion 32, or a structure in which the inner diameter of the bead portion 31 is larger than the inner diameter of the bead portion 32 may be adopted.

As illustrated in Fig. 1, the lower member 1 includes a lower surface plate 4 formed in a disk shape, and the bead portion 31 is mounted on an outer peripheral portion of the lower surface plate 4. The lower member 1 is provided with the bead seat portion 41 to which the bead portion 31 is mounted by a self-sealing method. The bead portion 31 is pressed downward by an action of an internal pressure of the diaphragm 3 and comes into close contact with the bead seat portion 41, thereby sealing between the diaphragm 3 and the lower member 1.

The bead seat portion 41 is formed with a tapered surface 41t that tapers axially inward. The bead portion 31 causes the bead bottom surface 31b to abut on the tapered surface 41t from the radially outer side. According to the above-described configuration, even when the inner diameter of the bead portion 31 is expanded due to secular change or the like, the bead portion 31 pressed downward by the action of the internal pressure is brought into close contact with the bead seat portion 41 to secure a fitting pressure, so that a sealed state can be appropriately maintained.

An elastic mechanism 5 functioning as a stopper is disposed below the lower surface plate 4. The elastic mechanism 5 includes a top plate 51, a bottom plate 52, and a laminated rubber body 53 sandwiched therebetween. The laminated rubber body 53 has a structure in which rubber as an elastic body and a steel plate as a rigid body are alternately laminated, and is formed in a cylindrical shape as a whole. In the present embodiment, the rubber and the steel plate are formed in a ring plate shape parallel to the radial direction, but the present disclosure is not limited thereto, and for example, a conical stopper structure in which the rubber and the steel plate are formed in a tapered cylindrical shape tapered upward may be used. The elastic mechanism 5 can be omitted.

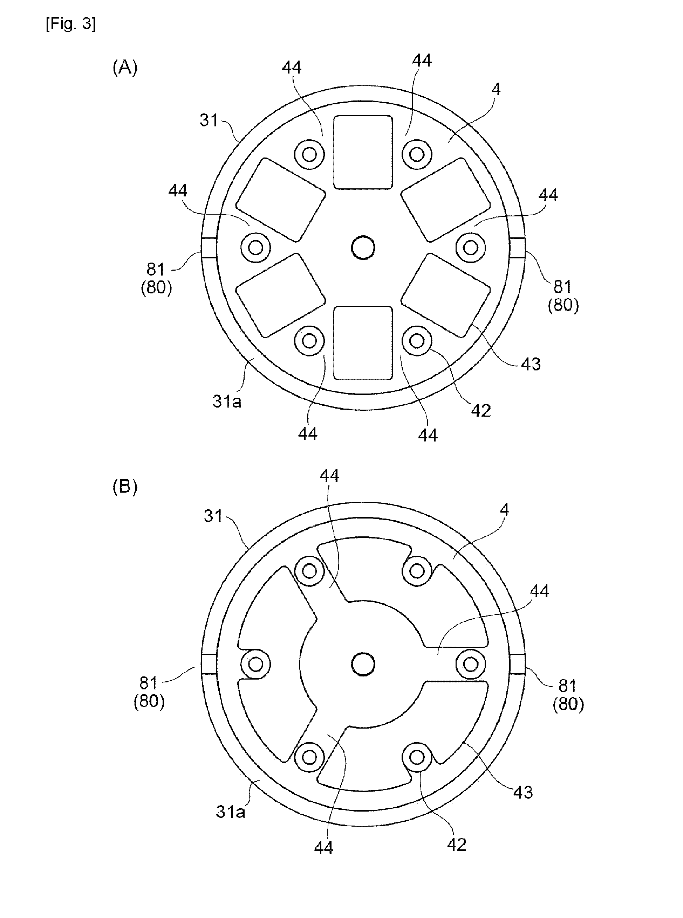

The lower surface plate 4 is formed to have a larger diameter than the top plate 51, and is configured to be externally fittable so as to cover the top plate 51. The lower surface plate 4 is provided with through holes 42 for mounting fixtures 45 for fixing the lower surface plate 4 to the top plate 51. As illustrated in Fig. 3, the through holes 42 are formed at a plurality of locations (six locations in the present embodiment) in the circumferential direction. Head portions of the fixtures 45 are housed in the through holes 42 so as not to protrude upward from an upper surface of the lower surface plate 4. For example, bolts are used as the fixtures 45 and fixtures 63 described later.

Slipping sheets 43 are attached to the upper surface of the lower surface plate 4. The slipping sheets 43 are formed of a material having excellent slipperiness such as a fluororesin (for example, PTFE). Upper surfaces of the slipping sheets 43 are disposed on the upper side of the upper surface of the lower surface plate 4. Therefore, when the air spring 10 is in a deflated state due to a puncture in practical use or the like, the upper member 2 lowered together with the vehicle body 92 abuts on the lower member 1 with the slipping sheets 43 interposed therebetween and is supported by the elastic mechanism 5. The slipping sheets 43 reduce frictional resistance when the lower member 1 and the upper member 2 slide during traveling in the above-described state.

The slipping sheets 43 are disposed at positions avoiding the through holes 42. Further, a void 44 to which the slipping sheets 43 are not attached is formed at least at one location in the circumferential direction. The void 44 is open at a central portion and an outer peripheral portion of the lower surface plate 4 in plan view as illustrated in Fig. 3. In an example of Fig. 3(A), the slipping sheet 43 each having a rectangular shape in plan view are disposed in each space between the through holes 42 adjacent in the circumferential direction. A shape of each of the slipping sheets 43 is not particularly limited, and for example, a slipping sheet 43 having an arc shape in plan view as illustrated in Fig. 3(B) may be used. In Fig. 3(A), the void 44 is formed at six locations, and in Fig. 3(B), the void 44 is formed at three locations.

As illustrated in Fig. 1, the upper member 2 includes the upper surface plate 6 formed in a disk shape, and a ring-shaped bead holder 7 attached to a lower side of an outer peripheral portion of the upper surface plate 6 via the fixtures 63, and the bead portion 32 is mounted between the upper surface plate 6 and the bead holder 7. The upper member 2 is provided with a bead seat portion 61 on which the bead portion 32 is mounted by a fastening method. The bead portion 32 is pressed upward by a fastening action of the fixtures 63 and comes into close contact with the bead seat portion 61, thereby sealing between the diaphragm 3 and the upper member 2.

A cylindrical boss portion 21 is fitted into a through hole at a central portion of the upper surface plate 6. The boss portion 21 communicates with a compressor (not illustrated) and functions as an air supply port for supplying air to the diaphragm 3. The upper surface plate 6 is formed to have a larger diameter than the lower surface plate 4. The lower surface of the upper surface plate 6 facing the upper surface of the lower surface plate 4 is constituted by a sliding plate 62. Therefore, in the deflated state, the lower member 1 and the upper member 2 abut on each other with the slipping sheets 43 and the sliding plate 62 interposed therebetween (see Fig. 4). The sliding plate 62 is formed of a material having excellent slipperiness such as a stainless steel plate, and bears displacement in a horizontal direction with a small resistance in the deflated state due to a puncture or the like in practical use. The upper surface plate 6 is not limited to the structure in which the sliding plate 62 is disposed on the lower surface thereof.

Attachment work of the air spring 10 includes an installation process of installing the air spring 10 in the railway vehicle as an attachment object, and then an air supply process of supplying air to the diaphragm 3. In the installation process, since the diaphragm 3 is not yet filled with air and the air spring 10 is in the deflated state as illustrated in Fig. 4, the upper member 2 abuts on the lower member 1. In the air supply process, the air flowing from the boss portion 21 is sent into the diaphragm 3 through the void 44. When the diaphragm 3 expands due to filling of the air, the air spring 10 enters the inflated state, and the upper member 2 rises and is separated from the lower member 1 by the action of the internal pressure as illustrated in Fig. 1.

When displacement of the bead portion 31 occurs as illustrated in Fig. 5 during the air supply process, the bead inner surface 31a disposed on the axially inner side (the upper side) with respect to the upper surface of the lower surface plate 4 abuts on the lower surface of the upper surface plate 6, and the bead portion 31 seals between the lower member 1 and the upper member 2, which causes a risk of hindering the supply of the air to the diaphragm 3 (in Fig. 5, the upper member 2 is separated from the lower member 1, but can abut on the lower member 1). Therefore, in the present embodiment, a configuration as described below is adopted so that the air can be supplied to the diaphragm 3 even when the bead portion 31 seals between the lower member 1 and the upper member 2 as described above.

The diaphragm 3 includes a pair of annular bead portions 31, 32, and the bead portion 31 includes the bead inner surface 31a facing the axially inner side (the upper side). As illustrated in Figs. 2, 3, ventilation passage forming portions 80 are provided on the bead inner surface 31a. The ventilation passage forming portions 80 are configured to form a ventilation passage communicating from a radially inner region Ai to a radially outer region Ao with respect to the bead inner surface 31a between a virtual plane VP orthogonal to the axial direction and in contact with the bead inner surface 31a, and the bead inner surface 31a. The virtual plane VP is a plane assuming a counterpart member (that is, the lower surface of the upper surface plate 6) that can abut on the bead inner surface 31a in the deflated state.

According to the above-described configuration, when the bead portion 31 seals between the lower member 1 and the upper member 2 as illustrated in Fig. 5, the ventilation passage is formed between the bead inner surface 31a and the lower surface of the upper surface plate 6. Since the ventilation passage communicates from the radially inner region Ai to the radially outer region Ao, the ventilation passage functions as a flow passage for sending the air flowing between the lower member 1 and the upper member 2 (mainly through the void 44) into the diaphragm 3. Therefore, even when the bead portion 31 seals between the lower member 1 and the upper member 2, the air can be supplied to the diaphragm 3.

In the present embodiment, the case where the bead portion 31 seals between the lower member 1 and the upper member 2 in the attachment work of the air spring 10 has been described. However, it is considered that the above-described phenomenon that the displaced bead portion 31 seals between the lower member 1 and the upper member 2 is not limited to the attachment work of the air spring 10. Although probability of occurrence is not high, for example, in maintenance work, there is a risk that the above-described phenomenon occurs even in a case where the air is once discharged from the air spring 10 in the inflated state to be brought into the deflated state, and then the air is supplied to be brought into the inflated state again, and in this case, a similar effect is achieved by the diaphragm 3.

As described above, the ventilation passage forming portion 80 forms a ventilation passage that allows passage (more specifically, movement from the radially inner region Ai to the radially outer region Ao) of the air between the bead inner surface 31a and the lower surface of the upper surface plate 6 when the bead inner surface 31a abuts on the lower surface of the upper surface plate 6 in the deflated state. Although it is conceivable to provide the ventilation passage forming portions on the counterpart member (that is, the upper surface plate 6) that can abut on the bead inner surface 31a, from the viewpoint of suppressing damage to the slipping sheets 43 when the upper surface plate 6 is displaced in the horizontal direction in the deflated state, and an increase in processing cost, the upper surface plate 6 is not provided with the ventilation passage forming portions in the present embodiment. However, the present disclosure is not limited to this, and a structure in which a ventilation passage forming portion is provided on the lower surface of the upper surface plate 6 in addition to the bead inner surface 31a may be adopted.

In the present embodiment, the ventilation passage forming portions 80 are each formed by a groove 81 recessed axially outward. The groove 81 is provided at least at one location in the circumferential direction, but the air can be efficiently supplied to the diaphragm 3 by providing the grooves at a plurality of locations (two locations in the present embodiment) in the circumferential direction as illustrated in Fig. 3. Although the groove 81 extends in parallel with the radial direction, the present disclosure is not limited thereto as long as it forms a ventilation passage communicating from the radially inner region Ai to the radially outer region Ao with respect to the bead inner surface 31a. The groove 81 is formed, for example, by providing a protrusion for groove formation in a vulcanization molding mold of the diaphragm 3 or by performing grooving on the diaphragm 3 after vulcanization molding.

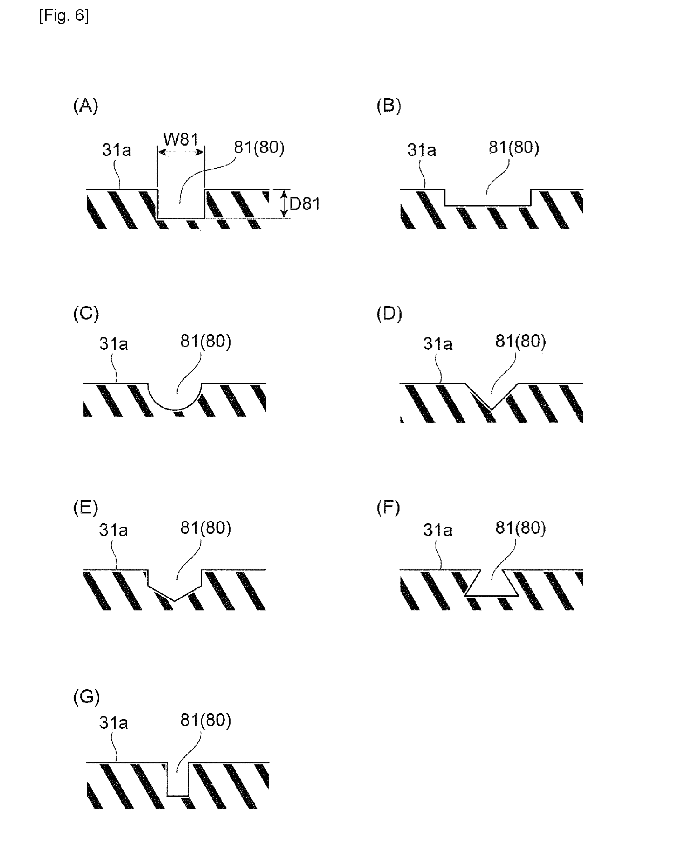

Fig. 6 is side views each illustrating the groove 81 as viewed along the radial direction, and corresponds to an X arrow view of Fig. 2. In the present embodiment, the rectangular groove 81 as illustrated in Fig. 6(A) is formed. The groove 81 has a width W81 (a maximum width) and a depth D81 (a maximum depth), and sizes thereof are not particularly limited. However, from the viewpoint of securing a groove cross-sectional area so that the air can be efficiently supplied, the width W81 is preferably 1 mm or more. In addition, from the viewpoint of preventing the groove 81 from being crushed in the deflated state as illustrated in Fig. 5, the width W81 is preferably 5 mm or less.

From the viewpoint of preventing the groove 81 from being crushed in the deflated state as illustrated in Fig. 5, the depth D81 is preferably 3 mm or more. Further, the depth D81 is desirably a size in which a groove bottom of the groove 81 does not reach a buried object such as the reinforcing layer 35 (see Fig. 2). As one example, the groove 81 having the width W81 of 5 mm and the depth D81 of 3 mm is exemplified. In the present embodiment, the width W81 and the depth D81 are each constant along an extending direction of the groove 81, but at least one of them may be changed along the extending direction of the groove 81.

A groove shape is not particularly limited, and various shapes illustrated in Figs. 6(B) to 6(G) can be adopted. In examples of Figs. 6(A) to 6(F), the width W81 is larger than the depth D81. The above-described groove shape is advantageous for appropriately increasing the width W81 to secure the groove cross-sectional area while appropriately decreasing the depth D81 to avoid exposure of the reinforcing layer 35. In an example of Fig. 6 (G), the depth D81 is larger than the width W81. The above-described groove shape is advantageous in preventing the groove 81 from being crushed in the deflated state as illustrated in Fig. 5. The depth D81 and the width W81 may have a same size.

The ventilation passage forming portion 80 is not limited to the groove 81 as long as it can form the ventilation passage as described above, and may be formed by, for example, a protrusion protruding axially inward. As the protrusion, a protrusion extending linearly along the radial direction, dotted protrusions disposed at intervals in the circumferential direction, and the like can be considered. However, in a case where the air spring 10 is brought into the deflated state due to a puncture or the like in practical use and the lower member 1 and the upper member 2 slide, there is a risk that the protrusion interferes and affects the sliding. Therefore, the ventilation passage forming portion 80 is preferably formed of the groove described in the present embodiment.

As described above, the air spring 10 is provided with the bead seat portion 41 to which the bead portion 31 including the bead inner surface 31a is mounted by the self-sealing method, and the tapered surface 41t is formed in the bead seat portion 41. According to the above-described configuration, the bead portion 31 is likely to be displaced axially inward due to a slight dimensional variation such as a relatively small inner diameter of the bead portion 31 or a relatively large outer diameter of the bead seat portion 41, which can cause the deflated state as illustrated in Fig. 5. Therefore, the structure in which the ventilation passage forming portion 80 is provided on the bead inner surface 31a as in the present embodiment is particularly useful.

In the present embodiment, the example in which the bead portion 31 including the bead inner surface 31a provided with the ventilation passage forming portions 80 is mounted by the self-sealing method has been described, but the present disclosure is not limited thereto, and a structure in which the bead portion 31 is mounted by a fastening method may be used. This is because even in the fastening method, when the bead portion is displaced due to slight loosening of fastening or the like, the deflated state in which the space between the lower member 1 and the upper member 2 is sealed by the bead portion can be brought about.

In the present embodiment, the example is illustrated in which the ventilation passage forming portions 80 are provided in the bead portion 31 having a relatively small inner diameter among the pair of bead portions 31, 32, but the present disclosure is not limited thereto. For example, when the bead portion 31 has a same diameter as the bead portion 32, one of the displaced bead portions abuts on the other bead portion, so that the deflated state in which the space between the lower member 1 and the upper member 2 is sealed by the bead portions can be brought about. Therefore, the bead inner surface 31a of the bead portion 31 facing the bead portion 32 and/or a bead inner surface of the bead portion 32 facing the bead portion 31 may be provided with the ventilation passage forming portions.

It is understood by those skilled in the art that the foregoing embodiment is a specific example of aspects below.
[1] A diaphragm for an air spring of the present disclosure includes a pair of annular bead portions. At least one of the pair of bead portions includes a bead inner surface facing the axially inner side. A ventilation passage forming portion is provided on the bead inner surface, and the ventilation passage forming portion is configured to form a ventilation passage communicating from a radially inner region to a radially outer region with respect to the bead inner surface between a virtual plane and the bead inner surface, the virtual plane being orthogonal to an axial direction and in contact with the bead inner surface. According to the above-described configuration, air can be supplied to the diaphragm even when the bead portion seals between a lower member and an upper member.
[2] In the diaphragm for an air spring according to [1], the ventilation passage forming portion may be formed by a groove recessed axially outward.
[3] In the diaphragm for an air spring according to [2], a width of the groove may be 1 mm or more.
[4] The diaphragm for an air spring according to [2] or [3], a depth of the groove may be 3 mm or more.
[5] In the diaphragm for an air spring according to any one of [1] to [4], the pair of bead portions may have inner diameters different from each other, and the ventilation passage forming portion may be provided in the bead portion having a relatively small inner diameter among the pair of bead portions.
[6] According to an air spring of the present disclosure, the diaphragm for an air spring according to any one of [1] to [5] is interposed between a lower member and an upper member. According to the above-described configuration, air can be supplied to the diaphragm even when the bead portion seals between a lower member and an upper member.
[7] In the air spring according to [6], a bead seat portion on which the bead portion including the bead inner surface may be mounted by a self-sealing method may be provided.
[8] In the air spring according to [7], the bead seat portion may be formed with a tapered surface that tapers axially inward.

The embodiment of the diaphragm for an air spring and the air spring according to the present disclosure has been described with reference to the drawings, but it should be understood that specific configurations are not limited to the embodiment. The scope of the present invention is indicated not only by the description of the above embodiment but also by the claims, and further includes meanings equivalent to the claims and all modifications within the scope of the claims.

The diaphragm for an air spring and the air spring according to the present disclosure are not limited to the above-described embodiment at all, and are not limited to the above-described functions and effects. The diaphragm for an air spring and the air spring according to the present disclosure can be variously improved and modified without departing from the spirit thereof. In addition, the configurations employed in the above-described embodiment can be employed in any combination.

## Claims

1. A diaphragm for an air spring comprising a pair of annular bead portions, wherein
at least one of the pair of bead portions includes a bead inner surface facing an axially inner side,
a ventilation passage forming portion is provided on the bead inner surface, and
the ventilation passage forming portion is configured to form a ventilation passage communicating from a radially inner region to a radially outer region with respect to the bead inner surface between a virtual plane and the bead inner surface, the virtual plane being orthogonal to an axial direction and in contact with the bead inner surface.

2. The diaphragm for an air spring according to claim 1, wherein the ventilation passage forming portion is formed by a groove recessed axially outward.

3. The diaphragm for an air spring according to claim 2, wherein a width of the groove is 1 mm or more.

4. The diaphragm for an air spring according to claim 2 or claim 3, wherein the width of the groove is 5 mm or less.

5. The diaphragm for an air spring according to any one of claims 2 to 4, wherein a depth of the groove is 3 mm or more.

6. The diaphragm for an air spring according to any one of claims 2 to 5, wherein the width of the groove is larger than the depth of the groove.

7. The diaphragm for an air spring according to any one of claims 2 to 6, wherein the grooves are provided at a plurality of locations in a circumferential direction.

8. The diaphragm for an air spring according to any one of claims 2 to 7, wherein the groove extends in parallel with a radial direction.

9. The diaphragm for an air spring according to any one of claims 1 to 8, wherein
the pair of bead portions has inner diameters different from each other, and
the ventilation passage forming portion is provided in the bead portion having a relatively small inner diameter among the pair of bead portions.

10. An air spring, wherein the diaphragm for an air spring according to any one of claims 1 to 9 is interposed between a lower member and an upper member.

11. The air spring according to claim 10, wherein a bead seat portion on which the bead portion including the bead inner surface is mounted by a self-sealing method is provided.

12. The air spring according to claim 11, wherein the bead seat portion is formed with a tapered surface that tapers axially inward.

13. The air spring according to claim 11 or claim 12, wherein the bead seat portion is provided on the lower member.

14. The air spring according to any one of claims 10 to 13, wherein
an elastic mechanism is disposed on a lower side of the lower member, and
the elastic mechanism includes a top plate, a bottom plate, and a laminated rubber body sandwiched between the top plate and the bottom plate.

## Amended claims

### Amended claims in accordance with Rule 137(2) EPC.

1. A diaphragm (3) for an air spring (10) comprising a pair of annular bead portions (31, 32), wherein at least one of the pair of bead portions (31) includes a bead inner surface (31a) facing an axially inner side, a ventilation passage forming portion (80) is provided on the bead inner surface (31a), and the ventilation passage forming portion (80) is configured to form a ventilation passage communicating from a radially inner region (Ai) to a radially outer region (Ao) with respect to the bead inner surface (31a) between a virtual plane (VP) and the bead inner surface (31a), the virtual plane (VP) being orthogonal to an axial direction and in contact with the bead inner surface (31a),
**characterised in that**
the ventilation passage forming portion (80) is formed by a groove (81) recessed axially outward.

2. The diaphragm (3) for an air spring (10) according to claim 1,
wherein a width of the groove (81) is 1 mm or more.

3. The diaphragm (3) for an air spring (10) according to claim 1 or claim 2,
wherein the width of the groove (81) is 5 mm or less.

4. The diaphragm (3) for an air spring (10) according to any one of claims 1 to 3,
wherein a depth of the groove (81) is 3 mm or more.

5. The diaphragm (3) for an air spring (10) according to any one of claims 1 to 4,
wherein the width of the groove (81) is larger than the depth of the groove (81).

6. The diaphragm (3) for an air spring (10) according to any one of claims 1 to 5,
wherein the grooves (81) are provided at a plurality of locations in a circumferential direction.

7. The diaphragm (3) for an air spring (10) according to any one of claims 1 to 6,
wherein the groove (81) extends in parallel with a radial direction.

8. The diaphragm (3) for an air spring (10) according to any one of claims 1 to 7,
wherein the pair of bead portions (31, 32) has inner diameters different from each other, and the ventilation passage forming portion (80) is provided in the bead portion (31) having a relatively small inner diameter among the pair of bead portions (31, 32).

9. An air spring (10),
wherein the diaphragm (3) for an air spring (10) according to any one of claims 1 to 8 is interposed between a lower member (1) and an upper member (2).

10. The air spring (10) according to claim 9,
wherein a bead seat portion (41) on which the bead portion (31) including the bead inner surface (31a) is mounted by a self-sealing method is provided.

11. The air spring (10) according to claim 10,
wherein the bead seat portion (41) is formed with a tapered surface (41t) that tapers axially inward.

12. The air spring (10) according to claim 10 or claim 11,
wherein the bead seat portion (41) is provided on the lower member (1).

13. The air spring (10) according to any one of claims 9 to 12,
wherein an elastic mechanism (5) is disposed on a lower side of the lower member (1), and the elastic mechanism (5) includes a top plate (51), a bottom plate (52), and a laminated rubber body (51) sandwiched between the top plate (51) and the bottom plate (52).
